# EUROPEAN PATENT SPECIFICATION

(11) **EP 1 158 512 B1**
(45) Date of publication and mention of the grant of the patent: **02.06.2004**
(21) Application number: 00904059.3
(22) Date of filing: 21.02.2000
(51) Int. Cl.: G11B 20/00, G11B 5/02

(54) **AUDIO OUTPUT CONTROL DEVICE**
AUDIOAUSGANGSSTEUERVORRICHTUNG
DISPOSITIF DE COMMANDE DE SIGNAL DE SORTIE AUDIO

(30) Priority: 25.02.1999 JP 4761499
(43) Date of publication of application: 28.11.2001
(73) Proprietor: MATSUSHITA ELECTRIC INDUSTRIAL CO., LTD., Kadoma-shi, Osaka 571-8501 (JP)
(72) Inventor: HAGIHARA, Toshiyuki, Osaka-shi, Osaka 559-0024 (JP); SAKURAI, Koji, Takatsuki-shi, Osaka 569-0822 (JP); KINOSHITA, Minoru, Katano-shi, Osaka 576-0052 (JP)
(74) Representative: Grünecker, Kinkeldey, Stockmair & Schwanhäusser Anwaltssozietät
(86) International application number: PCT/JP2000/000962
(87) International publication number: WO 2000/051120

(56) References cited:
- JP-A- 5 314 597
- JP-A- 8 063 875
- JP-A- 54 083 410
- JP-A- 56 098 764
- JP-A- 57 033 404
- JP-A- 62 088 101
- JP-U- 5 015 162
- PATENT ABSTRACTS OF JAPAN vol. 1998, no. 10, 31 August 1998 (1998-08-31) -& JP 10 126744 A (MATSUSHITA ELECTRIC IND CO LTD), 15 May 1998 (1998-05-15)
- PATENT ABSTRACTS OF JAPAN vol. 014, no. 279 (P-1062), 15 June 1990 (1990-06-15) & JP 02 081365 A (MATSUSHITA ELECTRIC IND CO LTD), 22 March 1990 (1990-03-22)
- PATENT ABSTRACTS OF JAPAN vol. 010, no. 327 (P-513), 7 November 1986 (1986-11-07) & JP 61 133073 A (SONY CORP), 20 June 1986 (1986-06-20)

## Description

The present invention relates to an audio output control circuit of a video tape recorder (VTR) for reproducing a digital audio signal, in particular to an audio output control device wherein an audio signal can be monitored even during high-speed playback when searching recorded content of a helical scan type digital video tape recorder.

Previously, when playing back recorded contents of a digital video tape recorder at a high speed for the purpose of searching and the like, there was a limitation in the reproduction of digital audio signals. For example, when a tape is being played back at a speed higher than a certain value, digital audio signals cannot be reproduced as a large noise is generated. Similarly, even within a speed range in which a digital audio signal can be reproduced, when an uncorrectable error has occurred during playback at a location of damage and the like of the tape, digital audio signals cannot be reproduced.

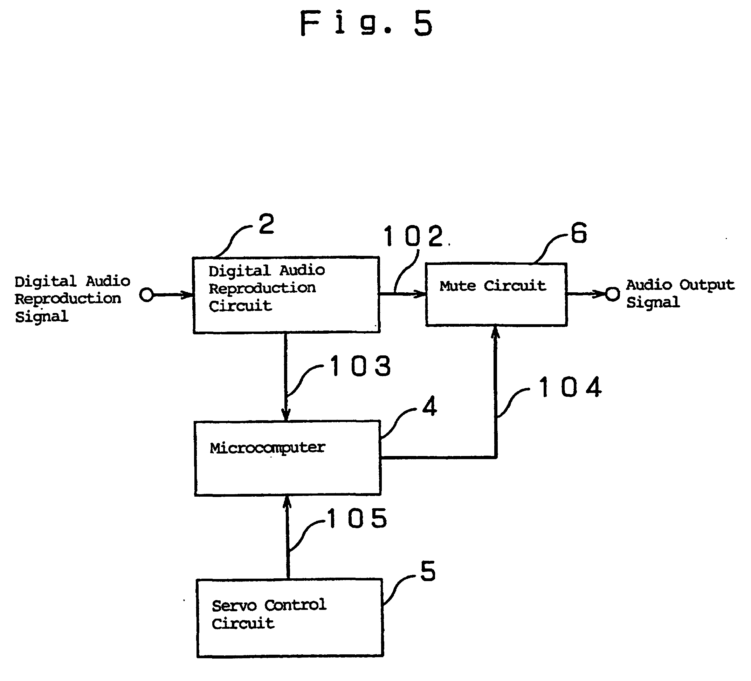

Fig. 5 is a block diagram of an existing audio output control device, where a digital audio reproduction circuit 2 is supplied with a digital audio reproduction signal from a helical-scan head (not shown), and produces an audio signal 102 after decoding it. In the event an error has occurred during reproduction, error information 103 is supplied to a microcomputer 4. A servo control circuit 5, originally for controlling tape transport system (not shown), detects tape speed in the tape transport system and provides tape speed information 105 to the microcomputer 4. The microcomputer 4 controls on/off of a mute circuit 6 by putting out a control signal 104 to the mute circuit 6 depending on the tape speed information 105 from the servo control circuit 5. The mute circuit 6 in an audio output stage is so structured that it receives the audio signal 102 and controls on/off of the audio signal 102 depending on a control signal 104 from the microcomputer 4.

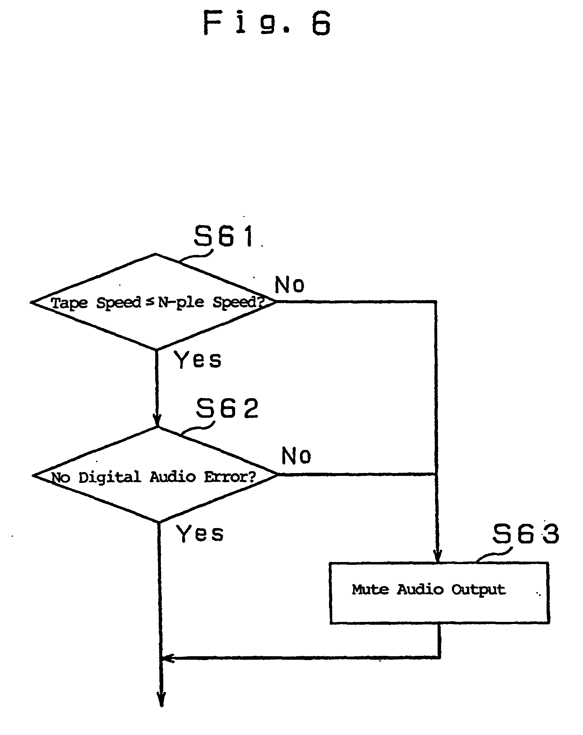

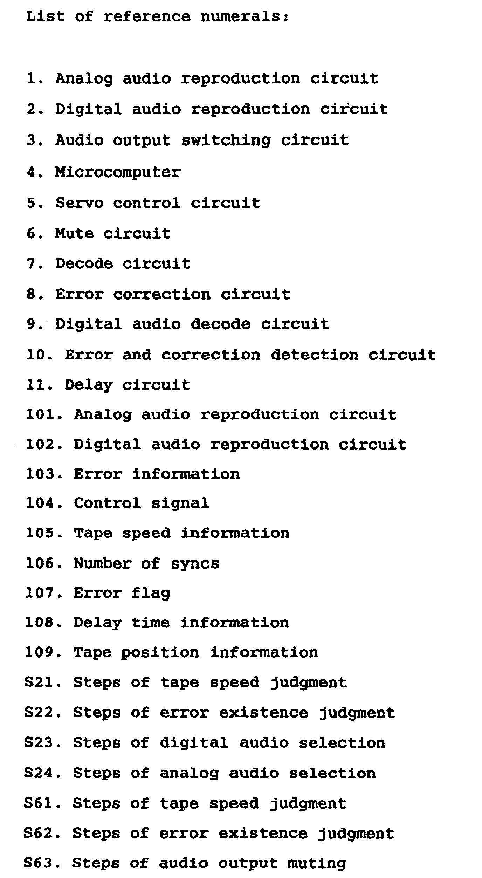

Fig. 6 is a flow chart illustrating microprocessor control of the mute circuit in the audio output stage. A description of existing technology will now be given below referring to Fig. 5 and Fig. 6.

Reproduced digital audio signals can only be reproduced at or below N times the tape speed (N being 1 to 2 depending on the system) at which noiseless reproduction is possible. Therefore, by monitoring the tape speed information 105 from the servo control circuit 5 with the microcomputer 4, when the tape speed in step S61 in Fig. 6 is N times the normal tape speed or higher, it is necessary to mute a mute circuit 6 with a control signal 104 in step S63 in order to prevent noise generation in the output stage. Also, in the event an uncorrectable error has occurred during digital audio reproduction, too, due to tape damage and the like, as it is necessary to detect in step S62 and mute at step S63, it is necessary for the microcomputer 4 to monitor error information 103 from the digital audio reproduction circuit 2 and mute the mute circuit 6 with a control signal 104 in the output stage when an error is detected.

This existing technology suffers from the difficulty of being unable to monitor reproduced audio signals during, for example, cue review for searching recorded contents over the entire tape speed as there is limitation in the playback speed when reproducing digital audio.

PATENT ABSTRACTS OF JAPAN vol. 1998. No. 10,31 August 1998 & JP 10 126744 A (MATSUSHTTA ELECTRIC IND CO LTD), 15 May 1998, describes a VTR processing a tape having a digital video signal, a digital audio signal recorded in helical scans and an analog audio signal separately recorded as a recording track along the edge of the tape. In a fast-forward-move of the tape the position of the tape can be confirmed by reproducing the analog audio signal.

JP-A-56098764 describes a VTR processing a tape with digital and analog signals recorded thereon. To facilitate the program search of the tape in fast-forward or stop mode the analog signal is used.

It is an object of the present invention to provide an audio output control device that enables monitoring of audio signals under whatever reproduction condition of digital audio.

This object is solved by the features of claim 1. The embodiment of the present invention includes in its basic structure a delay circuit between the analog audio signal reproduction means and the audio output switching means for delaying the analog audio signals, where delay time of the delay circuit is controllable based on VTR tape speed information.

With this structure, an effect of preventing discontinuity of reproduced sound during switching due to delay of digital signals from analog signals caused by encoding and decoding may be prevented.

The audio output control device of the present invention further comprises means for reproducing digital audio, means for reproducing analog audio, and audio output switching means for switching between the digital audio reproduction signal and the analog audio reproduction signal. In this structure, the audio output switching means may be configured to be controllable by a microcomputer, or a dedicated circuit having a like function, if not a microcomputer.

In the above structure, an effect of being able to monitor reproduced audio signals is obtained by switching to analog audio reproduction signal even during high-speed playback where digital audio signals cannot be reproduced or when there are many noises due to many errors caused by tape damage and the like.

Also, the audio output switching means may be structured in a manner such that it performs switching by receiving both the output signal of the digital audio reproduction means and the output signal of the analog audio signal reproduction means, mixing them, and continuously and gradually changing the mixing ratio.

With this structure, switching may be performed in a smooth and natural manner.

Also, the switching of the audio output switching means may be performed based on VTR tape speed information, where the tape speed information may be obtained from the servo control circuit or by calculation of time code that carries tape position information. With this, a situation may be prevented in which normal reproduction cannot be made because the tape speed is beyond a predetermined value thus generating noises.

The switching may also be performed based on reproduction error information of digital audio signals, in which case noise generation may be prevented in the event of some damage in the tape. The error information may be that the number of syncs per frame is smaller than a predetermined value or existence of an error flag.

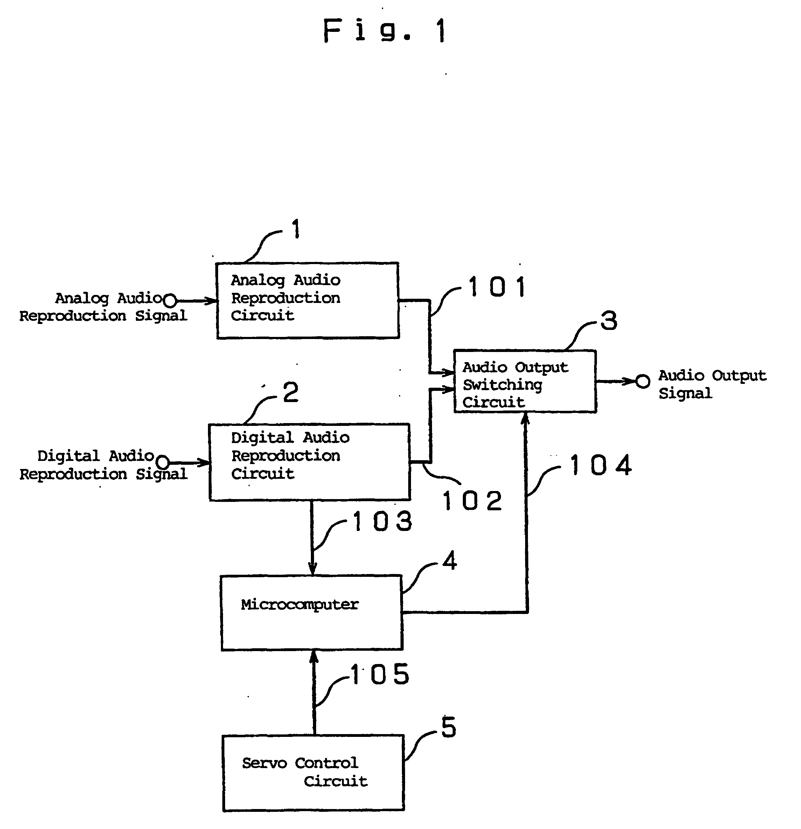

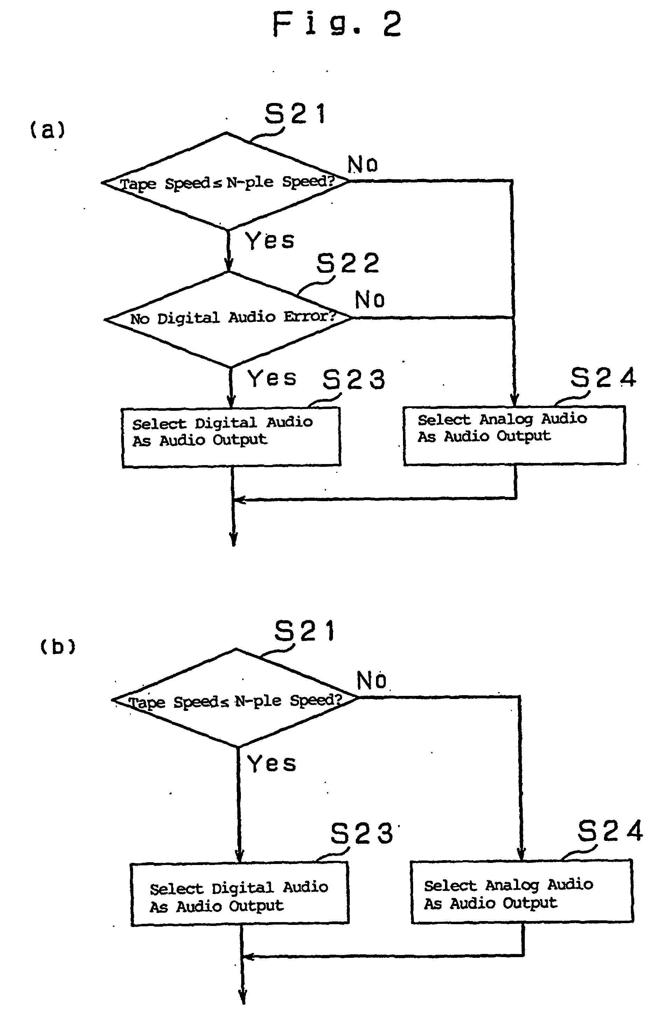

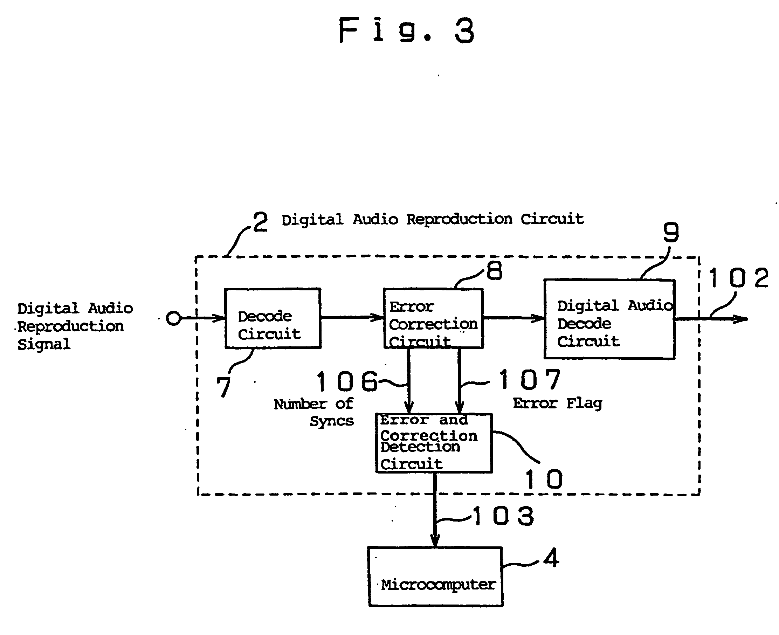

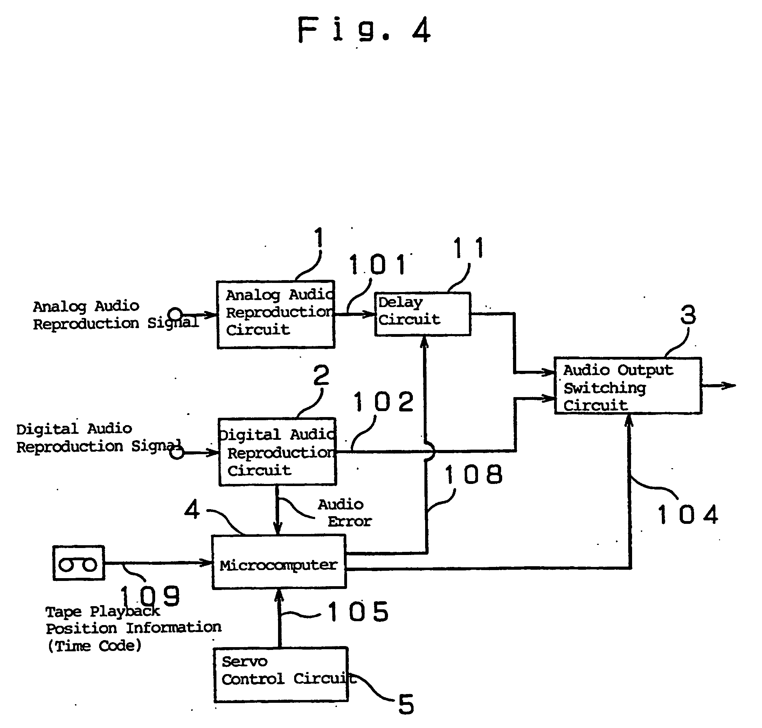

Fig. 1 is a block diagram of an audio output control device in a first or second exemplary embodiment. Fig. 2 (a) and (b) are flow charts showing processing inside a microcomputer in the first exemplary embodiment. Fig. 3 is a block diagram of a key part of a digital audio reproduction circuit in the second exemplary embodiment. Fig. 4 is a block diagram of a digital audio output control circuit in an exemplary embodiment of the present invention. Fig. 5 is a block diagram of an existing audio output control device. Fig. 6 is a flow chart showing existing internal processing of a microcomputer.

### Exemplary Embodiment 1:

Referring to Figs. 1 and 2, a description will be given below on a first exemplary embodiment. Fig. 1 is a block diagram showing an audio output control device present invention. In Fig. 1, the point of difference from the existing example of Fig. 5 is that an analog audio reproduction signal 101 put out from an analog audio reproduction circuit 1 that processes signals reproduced from a linear track along the longitudinal direction of a tape and a digital audio reproduction signal 102 put out from a digital audio reproduction circuit 2 are switchable by an audio output switching circuit 3 by the control of a control signal 104 from a microcomputer 4. As the switching condition of the audio output switching circuit 3 by the control signal 104, either error information 103 from the digital audio reproduction circuit 2 or tape speed information 105 from a servo control circuit is available.

Fig. 2 is a flow chart showing control process of the audio output switching circuit 3 by the microcomputer 4.

A description of operation of the present exemplary embodiment will now be given referring to Figs. 1 and 2. Reproduced signals of digital audio are processed by the digital audio reproduction circuit 2 and the output 102 is supplied to the audio output switching circuit 3. Similarly, reproduced signals of analog audio are processed by the analog audio reproduction circuit 1 and the output 101 is supplied to the audio output switching circuit 3. Here, as there is generally a limit in the speed range in which digital audio can be reproduced without noise, under a condition in which digital audio cannot be reproduced, by switching the audio output signal of the audio output control circuit to analog audio reproduction output, monitoring of audio reproduction signals is enabled even when digital audio cannot be reproduced. For example, as digital audio cannot be reproduced when the tape speed is high, tape speed information 105 from the servo control circuit 5 is monitored by the microcomputer 4. In step S21 in Fig. 2, when the tape speed is N times the speed at which digital audio can be reproduced or higher, in step S24 the audio output switching circuit 3 is switched to analog audio reproduction signal with a control signal 104 from the microcomputer 4. Also, in step S22, when some error has occurred in the digital audio reproduction signal thus disabling reproduction, by monitoring error information 103 from the digital audio reproduction circuit 2 with the microcomputer 4 irrespective of the tape speed, the audio output switching circuit 3 is switched in a similar fashion from the digital audio reproduction signal to analog audio reproduction signal with a control signal 104 from the microcomputer 4. If the result of steps S21, S22 is no , analog audio is selected in step S24. Even when the tape speed is equal to or greater than N times the normal speed, there is no need for switching so far as there is no error. Or, even when the tape speed is equal to or lower than N times the normal speed, switching may be made if an error has occurred. In this way, monitoring of audio reproduction signals is enabled under any condition by switching to analog audio output, even in a situation where digital audio reproduction signal cannot be reproduced.

In the above description, a description was made on use of a microcomputer 4 by way of an example in controlling the control signal 104 of the audio output switching circuit 3. However, the same purpose may be achieved by using a circuit structure having the same function as the above-mentioned microcomputer 4.

Also, though a description was made on obtaining tape speed information 105 from the servo control circuit 5, the tape speed can also be obtained from transition in time code contained in the analog signals or digital signals reproduced from the tape.

Furthermore, switching of the audio output switching circuit 3 from digital audio reproduction signal to analog audio reproduction signal may be made not only by alternatively selecting either signal but also by mixing both signals and switching by continuously and gradually changing the mixing ratio from an extreme on one side of a 100% digital audio reproduction signal output to another extreme on the other side of a 100% analog audio reproduction signal output in an overlapping manner.

### Exemplary Embodiment 2:

Fig. 3 is a block diagram of a key part of a digital audio reproduction circuit in a second exemplary embodiment. In Fig. 3, a digital audio reproduction circuit 2 includes a decode circuit 7 for decoding coded signals based on a special coding scheme for magnetic recording by inputting digital audio reproduction signals, an error correction circuit 8 for correcting errors in the output signal of the decode circuit 7, a digital audio decode circuit 9 for decompressing compressed digital output signals of the error correction circuit 8 or converting to analog signals, and an error and correction detection circuit 10 for detecting an error or state of error correction in the error correction circuit 8 and supplying the output to a microcomputer 4.

Now, operation of the present exemplary embodiment will be described below referring to Fig. 3. The digital audio reproduction signal reproduced by a head is decoded by the decode circuit 7, inputted to the error correction circuit 8, where errors are corrected by a known method, and converted to analog audio signal after compressed signal has been decompressed in the digital audio decode circuit 9. The number of syncs and error flags in the error correction circuit 8 are put out to the microcomputer 4 as error information 103.

In the event the microcomputer 4 detects in the error information 103 either that the number of syncs, namely, synchronization blocks in which audio data is grouped by the unit of blocks, is equal to or less than a predetermined number N per frame, or an error flag that it is too many to be corrected, judgment is made that there is digital audio reproduction error and the microcomputer 4 (or a control circuit having a like function) switches with a control signal 104 the audio output switching circuit 3 from digital audio reproduction signal to analog audio reproduction signal.

In this exemplary embodiment, as the number of syncs or existence of an error flag is used as error information 103 of the digital audio reproduction circuit in this way, when reproduction error has occurred due to some tape damage and the like, switching is made to analog audio, thus preventing generation of large noises during reproduction.

### Exemplary Embodiment 3:

Fig. 4 is a block diagram of a digital audio output control circuit in an exemplary embodiment of the present invention. In Fig. 4, the points of difference from Fig. 1 of the first and the second exemplary embodiments are that a delay circuit 11 for delaying analog signal is provided between the analog audio reproduction circuit 1 and the audio output switching circuit 3, and that the microcomputer 4 receives information on tape playback position from reproduction head and tape speed information 105 from the servo control circuit 5, and supplies delay time information 108 to the delay circuit. The other parts are the same as in Fig. 1 and description is simplified by assigning the same numerals.

The structure is as described above. A description on the operation will now be made below. Digital audio signals are caused to have a slight delay from analog signals as digital audio signals are encoded when recording and decoded when reproducing. At normal speed, encoding or decoding causes a delay of 2 to 3 frames, for example, compared with the analog audio signal, which is equivalent to approximately 60 to 100 milliseconds. This delay is doubled by recording and reproduction. When the tape is run at higher than the normal speed during reproduction, the time difference relative to analog audio is further increased by tape transport during decoding, causing discontinuity in reproduced contents when switched. This exemplary embodiment addresses this discontinuity. On receiving tape speed information 105, the microcomputer 4 first puts out delay time information 108 in a manner such that the delay time is made greater as the tape speed increases and controls the delay time of the delay circuit 11. Because of this, when the audio output switching circuit is switched by the previously mentioned control signal 104 from an output of the digital audio reproduction circuit to an output from the analog audio reproduction circuit, timing of the two reproduction signals are in agreement thus not causing discontinuity in the reproduced sound.

In this case, too, tape speed information may be obtained from transition per unit time of tape position information (time code) 109 as reproduced from the tape instead of the tape speed information 105 from the servo control circuit 5.

The audio output control device in accordance with the present invention provides an advantageous effect of enabling monitoring by means of audio reproduction signals under any conditions, by switching to reproduction output of analog audio reproduction signals even under a condition in which digital audio reproduction signals cannot be reproduced. The same effect can be obtained by switching by continuously and gradually changing from digital audio reproduction signal output to analog audio reproduction signal output in an overlapping manner.

Also, in a configuration in which a delay circuit is provided between the analog audio reproduction circuit and the audio output switching circuit for delaying analog signals, an advantageous effect of preventing reproduced sound from becoming discontinuous associated with switching especially after the tape speed has increased is obtained.

## Claims

1. An audio output control device comprising digital audio signal reproduction means (2) for reproducing digital audio signals recorded on a tape, analog audio signal reproduction means (1) for reproducing analog audio signals recorded on said tape, and audio output switching means (3) for switching between output signal of said digital audio signal reproduction means and output signal of said analog audio signal reproduction means, wherein,
when said tape is being driven at a normal playback speed, said audio output switching means is switched so that output signal of said digital audio signal reproduction means is put out, and at a certain speed exceeding the normal playback speed of said tape, output signal of said analog signal reproduction means is put out, **characterized in that** a delay circuit (11) is provided between said analog audio signal reproduction means (1) and said audio output switching means (3), and the delay time of said delay circuit is controlled based on VTR tape speed information.

2. The audio output control device of claim 1 further comprising a microcomputer (4), wherein said microcomputer controls said audio output switching means (3).

3. The audio output control device of claim 1, wherein control of said audio output switching means (3) is performed by a circuit structure other than a microcomputer.

4. The audio output control device of claim 1, wherein said audio output switching means (3) performs switching by inputting output signals of said digital audio signal reproduction means (2) and output signals of said analog audio signal reproduction means (1), mixing both of them, and continuously and gradually changing the mixing ratio thereof.

5. The audio output control device of claim 1, wherein switching control of said audio output switching means (3) from output signal of said digital audio signal reproduction means (2) to output signal of said analog audio signal reproduction means is performed based on VTR tape speed information.

6. The audio output control device of claim 1, wherein switching control of said audio output switching means (3) from output signal of said digital audio signal reproduction means (2) to output signal of said analog audio signal reproduction means (1) is performed based on digital audio signal reproduction error information.

7. The audio output control device of claim 5 or 6, wherein said tape speed information is obtained from a time code reproduced from tape or from a servo control circuit (15).

8. The audio output control device of claim 6, wherein said reproduction error information is obtained from the number of syncs per frame being equal to or less than a predetermined value, or the existence of an error flag.

9. Video tape recorder including an audio output control device according to any of claims 1 to 8.

## Patentansprüche

1. Audioausgangssteuervorrichtung mit
einer digitalen Audiosignalwiedergabeeinrichtung (2) zur Wiedergabe auf einem Band aufgezeichneter digitaler Audiosignale,
einer analogen Audiosignalwiedergabeeinrichtung (1) zur Wiedergabe auf dem Band aufgezeichneter analoger Audiosignale sowie
einer Audioausgangsschalteinrichtung (3) zum Schalten zwischen dem Ausgangssignal der digitalen Audiosignalwiedergabeeinrichtung und dem Ausgangssignal der analogen Audiosignalwiedergabeeinrichtung,
wobei bei einem Bandlauf mit normaler Abspielgeschwindigkeit die Audioausgangsschalteinrichtung derart geschaltet wird, dass das Ausgangssignal der digitalen Audiosignalwiedergabevorrichtung ausgegeben wird, und
wobei bei einem Bandlauf mit einer bestimmten Geschwindigkeit größer als der normalen Abspielgeschwindigkeit des Bandes das Ausgangssignal der analogen Signalwiedergabeeinrichtung ausgegeben wird,
**dadurch gekennzeichnet,**
**dass** zwischen der analogen Audiosignalwiedergabeeinrichtung (1) und der Audioausgangsschalteinrichtung (3) eine Verzögerungsschaltung (11) vorgesehen ist, und
**dass** die Verzögerungszeit der Verzögerungsschaltung in Abhängigkeit von der VTR-Bandgeschwindigkeitsinformation gesteuert wird.

2. Audioausgangssteuervorrichtung nach Anspruch 1, des Weiteren umfassend einen Mikrocomputer 4, der die Audioausgangsschalteinrichtung (3) steuert.

3. Audioausgangssteuervorrichtung nach Anspruch 1, bei der die Steuerung der Audioausgangsschalteinrichtung (3) durch eine Schaltstruktur erfolgt, die nicht diejenige eines Mikrocomputers ist.

4. Audioausgangssteuervorrichtung nach Anspruch 1, bei der die Audioausgangsschalteinrichtung (3) das Schalten durch Eingeben von Ausgangssignalen der digitalen Audiosignalwiedergabeeinrichtung (2) und von Ausgangssignalen der analogen Audiosignalwiedergabeeinrichtung (1), durch Mischen beider und durch kontinuierliches und allmähliches Ändern des Mischverhältnisses beider vornimmt.

5. Audioausgangssteuervorrichtung nach Anspruch 1, bei der die Schaltsteuerung der Audioausgangsschalteinrichtung (3) von dem Ausgangssignal der digitalen Audiosignalwiedergabeeinrichtung (2) zu dem Ausgangssignal der analogen Audiosignalwiedergabeeinrichtung in Abhängigkeit von der VTR-Bandgeschwindigkeitsinformation erfolgt.

6. Audioausgangssteuervorrichtung nach Anspruch 1, bei der die Schaltsteuerung der Audioausgangsschalteinrichtung (3) von dem Ausgangssignal der digitalen Audiosignalwiedergabeeinrichtung (2) zu dem Ausgangssignal der analogen Audiosignalwiedergabeeinrichtung (1) in Abhängigkeit von einer Wiedergabefehlerinformation des digitalen Audiosignals erfolgt.

7. Audioausgangssteuervorrichtung nach Anspruch 5 oder 6, bei der die Bandgeschwindigkeitsinformation aus einem Zeitcode erhalten wird, der von dem Band oder von einer Servosteuerschaltung (15) wiedergegeben wird.

8. Audioausgangssteuervorrichtung nach Anspruch 6, bei der die Wiedergabefehlerinformation aus der Anzahl von Synchronisationsblöcken pro Frame, die gleich oder kleiner als ein vorbestimmter Wert ist, oder aus einem gesetzten Fehlermerker erhalten wird.

9. Videobandrekorder umfassend eine Audioausgangssteuervorrichtung entsprechend einem der Ansprüche 1 bis 8.

## Revendications

1. Dispositif de commande de sortie audio comprenant un moyen de reproduction de signal audio numérique (2) pour reproduire des signaux audio numériques enregistrés sur une bande, un moyen de reproduction de signal audioanalogique (1) pour reproduire des signaux audio analogiques enregistrés sur ladite bande et un moyen de commutation de sortie audio (3) pour commuter entre le signal de sortie dudit moyen de reproduction de signal audio numérique et le signal de sortie dudit moyen de reproduction du signal audio analogique, dans lequel,
lorsque ladite bande est entraînée à une vitesse de lecture normale, ledit moyen de commutation de sortie audio est commuté de sorte que le signal de sortie dudit moyen de reproduction de signal audio numérique est émis, et à une certaine vitesse dépassant la vitesse de lecture normale de ladite bande, le signal de sortie dudit moyen de reproduction de signal analogique est émis, **caractérisé en ce que** un circuit à retard (11) est pourvu entre ledit moyen de reproduction de signal audio analogique (1) et ledit moyen de commutation de sortie audio (3), et le temps de retard dudit circuit à retard est commandé sur la base des informations de vitesse de défilement de la bande du VTR.

2. Dispositif de commande de sortie audio selon la revendication 1, comprenant en outre un micro-ordinateur (4) dans lequel ledit micro-ordinateur commande ledit moyen de commutation de sortie audio (3).

3. Dispositif de commande de sortie audio selon la revendication 1, dans lequel la commande dudit moyen de commutation de sortie audio (3) est effectuée par une structure de circuit autre qu'un micro-ordinateur.

4. Dispositif de commande de sortie audio selon la revendication 1, dans lequel ledit moyen de commutation de sortie audio (3) effectue la commutation en entrant des signaux de sortie dudit moyen de reproduction de signal audio numérique (2) et des signaux de sortie dudit moyen de reproduction de signal audio analogique (1), en mélangeant les deux, et en changeant continuellement et graduellement leur rapport de mélange.

5. Dispositif de commande de sortie audio selon la revendication 1, dans lequel la commande de commutation dudit moyen de commutation de sortie audio (3) du signal de sortie dudit moyen de reproduction de signal audio numérique (2) au signal de sortie dudit moyen de reproduction de signal audio analogique est effectué sur la base des informations de vitesse de défilement de la bande du VTR.

6. Dispositif de commande de sortie audio selon la revendication 1, dans lequel la commande de commutation dudit moyen de commutation de sortie audio (3) du signal de sortie dudit moyen de reproduction de signal audio numérique (2) au signal de sortie dudit moyen de reproduction de signal audio analogique (1) est effectué sur la base des informations d'erreur de reproduction de signal audio numérique.

7. Dispositif de commande de sortie audio selon la revendication 5 ou 6, dans lequel lesdites informations de vitesse de défilement de la bande sont obtenues à partir d'un code temporel reproduit depuis la bande ou depuis un circuit d'asservissement (15).

8. Dispositif de commande de sortie audio selon la revendication 6, dans lequel lesdites informations d'erreur de reproduction sont obtenues à partir du nombre de synchronisations par trame étant égal ou inférieur à une valeur prédéterminée, ou à partir de l'existence d'un indicateur d'erreur.

9. Magnétoscope comprenant un dispositif de commande de sortie audio selon l'une quelconque des revendications 1 à 8.
